# EUROPEAN PATENT APPLICATION

(11) **EP 0 932 290 A1**
(43) Date of publication of application: **28.07.1999**
(21) Application number: 99101153.7
(22) Date of filing: 21.01.1999
(51) Int. Cl.: H04M 11/06

(54) **Interface apparatus and method for a communications device**

(30) Priority: 21.01.1998 GB 9801276
(71) Applicant: MOTOROLA LTD, Alencon Link, Basingstoke, Hampshire RG21 7PL (GB)
(72) Inventor: Dunn, John Alexander, London W4 3BY (GB)
(74) Representative: Morgan, Marc

(57) **Abstract**

An interface for a modem comprises a gyrator (301) coupled in parallel to an AC circuit of a modem and a telephone exchange. The gyrator (301) has an opto-isolator (324) for channelling the electrical current through the gyrator (301), thereby modifying the effective electrical resistance of the gyrator (301).

## Description

### Field of the Invention

The present invention relates to an interface apparatus and method for a communications device capable of seizing a Public Switched Telephone Network, for example, a modem.

### Background of the Invention

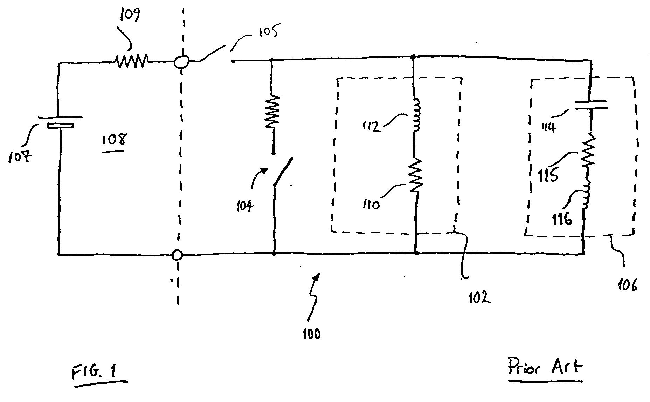

A modem line interface or Data Access Arrangement (DAA) is used to isolate the circuitry of a modem from a telephone exchange. Referring to FIG. 1, a simplified form of a DAA 100 typically comprises an electronic inductor or gyrator 102 connected in parallel with a pulse-dial switch arrangement 104, and an AC circuit 106 for coupling high frequency signals to the modem and impedance matching the modem and the DAA 100 with a telephone exchange 108. The gyrator 102 is also connected, in parallel, to the telephone exchange 108 (the border of which is shown by a broken line). The gyrator 102 is an arrangement of circuit elements, for example, active elements, used to realise an inductance without the use of an inductor, and can include a direct current limiting facility; such an arrangement of circuit elements exhibits inductive and resistive properties. An example of the gyrator 102 can be found in Microelectronic Circuits (published by CBS College Publishing, 1982) at page 30. However, the simplified illustration merely shows for the purposes of simplicity and clarity of description, a resistive element 110 and an inductive element 112. Similarly, the AC circuit 106 is shown in simplified form; the AC circuit 106 possessing capacitive, resistive and inductive properties shown by a capacitive element 114, the resistive element 115 and a further inductive element 116, respectively.

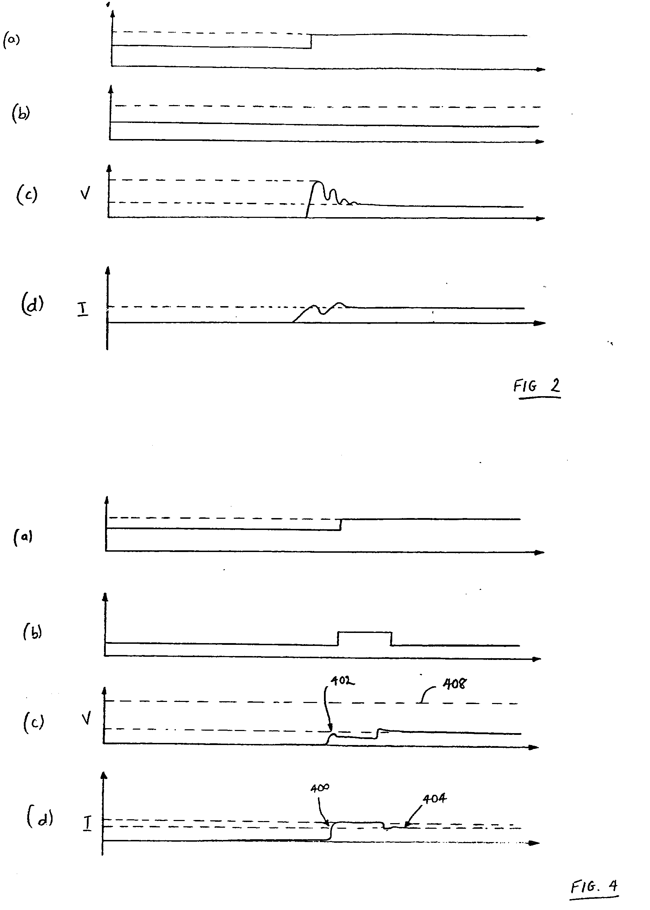

For a modem to be able to dial a telephone number corresponding to a terminating apparatus (not shown) with which communication is desired, for example, a computer connected to a telephone line via a further modem, a line must be seized. In order to seize the line, a direct current must be drawn ('going off-hook') in order to signal to the exchange 108 that the line is required. Referring to FIG. 2, the off-hook switch 105 is therefore actuated (FIG. 2a) so that the exchange 108 detects the current drawn, and thereby the request for the line. The pulse-dial switch arrangement 104 is not activated (FIG. 2b).

However, an undesirable LC resonance loop is formed by the resistive and inductive properties of the gyrator 102 and the capacitive, resistive and inductive properties of the AC circuit 106. The LC resonance loop can oscillate when the off-hook switch 105 is switched to an "on" state, generating a transient (FIG. 2c and 2d) in the electrical current drawn from the exchange 108 and the corresponding voltage signal across the DAA 100. The oscillation is initiated by the sudden appearance of a DC feed voltage 107 applied by the exchange 108 across the DAA 100 (hereinafter referred to as the "full line voltage") when the off-hook switch 105 is switched on. The amplitude of the oscillation is dependent upon the time for which the gyrator 102 is not initially conducting. When the gyrator 102 is finally drawing a steady state current, the DC voltage across the DAA 100 falls to a much lower value due to the effect of the feed resistance 109 of the exchange 108.

The transient is unacceptable, since in order to achieve approval from various world-wide telecommunications standards authorities, and in particular to conform to European Standard TBR21, once the DAA 100 has started to draw a significant electrical current, the electrical current must stay above a predetermined value. The electrical current must not fall below the predetermined value because some telephone exchanges can confuse the transient with an attempt to pulse-dial.

The amplitude of the oscillation can be reduced by altering the time constant of the gyrator 102 or changing the AC characteristics of the AC circuit. However, such changes can introduce attenuation of data signals from the modem at the lower part of the bandwidth of the data signals. Additionally, if changes in the AC impedance of the DAA 100 occur, AC impedance regulations, in most countries, will be infringed.

In order to pulse-dial once the line has been seized, the pulse-dial switch arrangement 104 is actuated so as to effectively shunt current away from the gyrator 102 and the AC circuit 106. The off-hook switch 105 is then pulsed by actuating the off-hook switch 105 with regular interruptions so as to draw a higher-than-normal direct current pulses interspersed with regular interruptions; the number of pulses corresponding to digits being dialled.

It is therefore an object of the present invention to obviate or mitigate the above mentioned problems.

### Summary of the Invention

According to a first aspect of the present invention, there is provided an interface for a modem comprising means for selectively permitting an electrical current to flow to a gyrator, and means for selectively routing the electrical current, wherein the means for selectively routing the electrical current is coupled top the gyrator so as to channel the electrical current through the gyrator, thereby modifying the effective electrical impedance of the gyrator.

It is thus possible to provide an interface apparatus for a modem which, when seizing a line, draws an electrical current with a transient which does not fall below the predetermined value after initially rising thereabove. Also, the significant reduction of attenuation of low frequency band signals becomes possible.

According to a second aspect of the present invention, there is provided an interface for a communications device comprising a first switch for selectively permitting an electrical current to flow to a gyrator, and a second switch for selectively routing the electrical current, wherein the second switch for selectively routing the electrical current is coupled to the gyrator so as to channel the electrical current through the gyrator, thereby modifying the effective electrical impedance of the gyrator.

According to a third aspect of the present invention, there is provided a method of limiting current for a communications device comprising selectively permitting an electrical current to flow to a gyrator, and selectively routing the electrical current so as to channel the electrical current through the gyrator, thereby modifying the effective electrical impedance of the gyrator.

Other, preferred, features and advantages are set forth in, and will become apparent from, dependent Claims 2 to 11 and the accompanying description.

### Brief Description of the Drawings

At least one embodiment of the invention will now be described, by way of example, with reference to the accompanying drawings, in which:
FIG. 1 is a schematic diagram of a prior art interface apparatus between a telephone exchange and a modem;
FIG. 2 is a timing diagram corresponding to the circuit of FIG. 1;
FIG. 3 is a schematic diagram of an interface apparatus between a telephone exchange and a modem constituting an embodiment of the invention; and
FIG. 4 is a timing diagram corresponding to the embodiment of FIG. 3.

### Description of a Preferred Embodiment

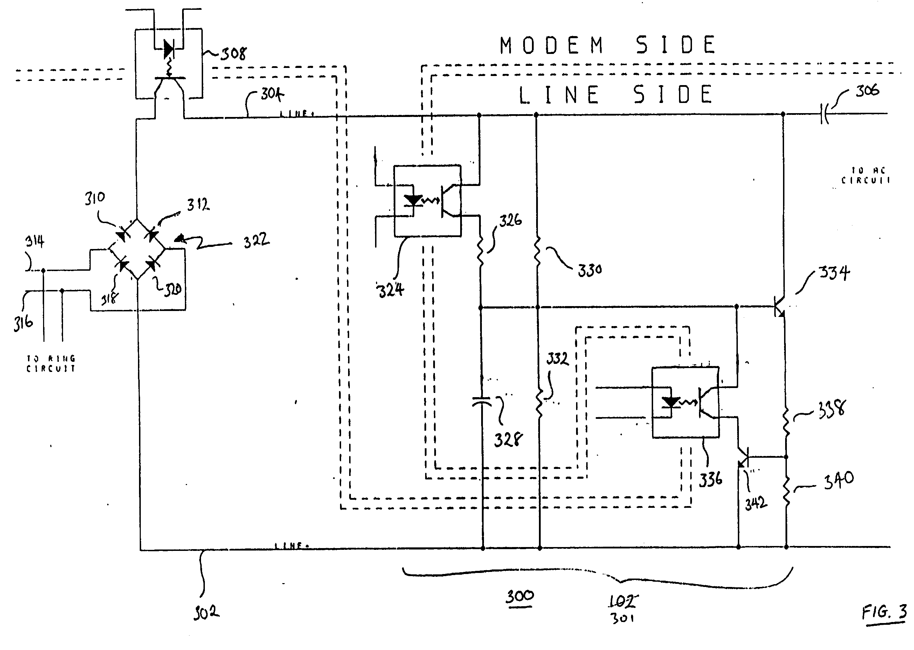

Referring to FIG. 3, a DAA 300 comprises a first rectified line 302 and a second rectified line 304 connected to an AC circuit (coupled to a modem circuit - both not shown) via a coupling capacitor 306. The second line 304 is connected to a first terminal of a first opto-isolator 308, a second terminal of the opto-isolator 308 being connected to a cathode of a first diode 310 and a cathode of a second diode 312. An anode of the first diode 310 is connected to a first exchange line 314 and an anode of the second diode 312 is connected to a second exchange line 316, the first and second exchange lines 314, 316 being connected to a ring circuit (not shown) known in the art. The anode of the first diode 310 is also connected to the cathode of a third diode 318, an anode of which is connected to the first line 302. The anode of the second diode 312 is also connected to a cathode of a fourth diode 320, the cathode of the fourth diode 320 being connected to the anode of the third diode 318. Together, the first, second, third and fourth diodes 310, 312, 318, 320 form a bridge rectifier 322.

The second line 304 is connected to a first terminal of a second opto-isolator 324, a second terminal of which is connected to a first terminal of a 200Ω resistor 326. A second terminal of the 200Ω resistor 326 is connected to a first terminal of a 4.7 µF gyrator capacitor 328, a second terminal of a first 33KΩ resistor 330, a first terminal of a second 33KΩ resistor 332, and a base terminal of a first npn bipolar transistor 334. A second terminal of the gyrator capacitor 328 and a second terminal of the second 33KΩ resistor 332 are connected to the first line 302. A first terminal of the first 33KΩ resistor 330 and a collector terminal of the first transistor 334 are connected to the second line 304 and a first terminal of the coupling capacitor 306.

An emitter terminal of the first transistor 334 is connected to a first terminal of a first 11Ω resistor 338, the second terminal of the 11Ω resistor 338 being connected to a base terminal of a second npn bipolar transistor 342 and a first terminal of a second 11Ω resister 340. The second terminal of the second 11Ω resistor 340 is connected to the first line 302. A collector terminal of the second transistor 342 is connected to a first terminal of a third opto-isolator 336, a second terminal of the third opto-isolator 336 is connected to the base terminal of the first transistor 334. An emitter terminal of the second transistor 342 is connected to the first line 302.

The first and second 33KΩ resistors 330, 332, the gyrator capacitor 328, the first transistor 334, the first and second 11Ω resistors 338, 340, the second transistor 342 and the third opto-isolator 336 together form a gyrator 301. It should be noted that the second transistor 342 and the third opto-isolator 336, and either the first or second 11Ω resister 338, 340 are not essential elements of the gyrator 301.

In normal operation, a line is seized as follows. The first opto-isolator 308 and the second opto-isolator 324 are switched to a "on" state substantially at the same time, the second opto-isolator 324 being witched to an "on" state for a predetermined period of time, for example, 5 ms. Referring to FIG. 4, a direct current flows through the first opto-isolator 308 as shown in FIG. 4a. Similarly, a direct current pulse flows through the second opto-isolator 324 during the predetermined period of time (FIG. 4b). The current flowing through the second opto-isolator 324 charges the gyrator capacitor 328 and turns-on the first transistor 334. Thus, when both the first and second opto-isolators 308, 324 are actuated, a higher-than-normal direct current 400 is drawn from the exchange 108, thus maintaining a voltage 402 applied across the first and second lines 302, 304 at a low level. This prevents an effective LC resonance loop formed by the gyrator 301 and the AC circuit from oscillating by preventing the LC resonance loop from being "charged" by the full line voltage 408, thereby reducing the amplitude a transient generated. When the second opto-isolator 324 is switched back to an "off" state after the predetermined period of time, direct current drawn by the gyrator 301 (FIG. 4d) drops to a final current value 404, dictated by the characteristics of the exchange 108 and also, to a lesser extent, the DAA 300 during a period of time dictated by the value of the gyrator capacitor 328 and the first and second 33KΩ resistors 330, 332. Consequently, the rate of change of the current to the final current value 404 drawn by the gyrator 301 is slow, for example, between 1 to 10 ms, and the amplitude of the line voltage change is small, for example, a few volts and correspond to the characteristics of the gyrator 301 and the exchange 108. Consequently, the amplitude of any transient generated is greatly reduced. It is thus possible to optimise the gyrator 301 and the AC circuit so as to provide optimum data transmission performance, and improve AC impedance matching without affecting the properties of unwanted transients.

If it is necessary to limit the current, for example to 60mA, drawn by the DAA 300 when a line is seized, the third opto-isolator 336 is actuated at the same time as the first and second opto-isolators 308, 324, thereby permitting the second transistor 342 to operate in a current limiting capacity known in the art. Additionally, if the value of the resistor 326 is changed it is also possible to limit the current drawn when pulse-dialling (as described below).

A telephone number can be pulse-dialled using the above circuit by actuating the second opto-isolator 324 to generate a low impedance path through the gyrator 301. The first opto-isolator 308 is then pulsed in a standard manner known to those skilled in the art, as described above.

## Claims

1. An interface for a communications device comprising means for selectively permitting an electrical current to flow to a gyrator, and means for selectively routing the electrical current, wherein the means for selectively routing the electrical current is coupled to the gyrator so as to channel the electrical current through the gyrator, thereby modifying the effective electrical impedance of the gyrator.

2. An apparatus as claimed in Claim 1, wherein the means for selectively permitting an electrical current to flow is a switching means.

3. An apparatus as claimed in Claim 2, wherein the switching means is in an opto-isolator.

4. An apparatus as claimed in Claim 1, wherein the means for selectively routing the electrical current is a switching means.

5. An apparatus as claimed in Claim 4, wherein the switching means is in an opto-isolator.

6. An apparatus as claimed in any one of the preceding claims, wherein the gyrator further comprises electronic switching means, and the means for selectively routing the electrical current is arranged to route the electrical current to the electronic switching means.

7. An apparatus as claimed in Claim 6, wherein the electronic switching means is a transistor.

8. An apparatus as claimed in any one of the preceding claims, wherein the gyrator further comprises means for selectively limiting the current routed through the gyrator.

9. An apparatus as claimed in Claim 8, wherein the means for selectively limiting the current is an electronic switching means coupled to a switching means.

10. An apparatus as claimed in Claim 9, wherein the electronic switching means is a transistor.

11. An apparatus as claimed in Claim 9, wherein the switching means is an opto-isolator.

12. A modem comprising the interface apparatus according to any one of the preceding claims.

13. An interface apparatus for a communications device substantially as hereinbefore described with reference to FIGs. 3 or 4.

14. An interface for a communications device comprising a first switch for selectively permitting an electrical current to flow to a gyrator, and a second switch for selectively routing the electrical current, wherein the second switch for selectively routing the electrical current is coupled to the gyrator so as to channel the electrical current through the gyrator, thereby modifying the effective electrical impedance of the gyrator.

15. A method of limiting current for a communications device comprising:
selectively permitting an electrical current to flow to a gyrator, and
selectively routing the electrical current so as to channel the electrical current through the gyrator, thereby modifying the effective electrical impedance of the gyrator.
